# EUROPÄISCHE PATENTANMELDUNG

(11) **EP 2 319 681 A1**
(43) Veröffentlichungstag der Anmeldung: **11.05.2011**
(21) Anmeldenummer: 10014226.4
(22) Anmeldetag: 03.11.2010
(51) Int. Cl.: B29C 65/04, B29C 65/18, B29C 65/08, B29K 67/00, B29K 705/02, B29K 709/02

(54) **Schweissverfahren mit einem antiadhäsiven flüssigen Medium, Beaufschlagungseinrichtung dieses Mediums sowie Schweissvorrichtung**

(30) Priorität: 06.11.2009 DE 102009052247; 20.11.2009 DE 102009053883
(71) Anmelder: PackSys Global (Switzerland) Ltd., 8630 Rüti (CH)
(72) Erfinder: Brändli, René, 8733 Eschenbach SG (CH); Adam, Ingo, 8308 Illnau ZH (CH)
(74) Vertreter: Wagner, Kilian

(57) **Zusammenfassung**

Die Erfindung betrifft ein Schweißverfahren zum Fügen eines ersten Fügepartners mit mindestens einem zweiten Fügepartner, insbesondere zum Herstellen eines Rohrkörpers für eine Verpackungstube, wobei der erste Fügepartner mittels eines endlosen, umlaufenden, ersten Schweißbandes (5) aufgeschmolzen wird. Erfindungsgemäß ist vorgesehen, dass das erste Schweißband (5), während des Umlaufens und/oder im Stillstand, mit einem flüssigen Medium zum Verhindern eines Anhaftens des ersten Fügepartners an dem ersten Schweißband (5) beaufschlagt wird.

## Beschreibung

Die Erfindung betrifft ein Schweißverfahren, insbesondere Hochfrequenz-Schweißverfahren, Ultraschall-Schweißverfahren, oder WiderstandsSchweißverfahren, etc. zum Fügen eines ersten Fügepartners mit mindestens einem zweiten Fügepartner, wobei der erste Fügepartner mittels eines endlosen, umlaufenden, ersten Schweißbandes aufgeschmolzen wird. Bei den Fügepartnern kann es sich alternativ um voneinander separate Teile oder unterschiedliche Abschnitte eines einzigen Teils handeln. Ferner betrifft die Erfindung eine Beaufschlagungseinrichtung zum Einsatz bei einem Schweißverfahren sowie eine Schweißvorrichtung mit mindestens einer ersten Energiequelle, die mit einem umlaufend antreibbaren ersten Schweißband zusammenwirkt.

Aus der EP 0 628 399 B1 ist ein Hochfrequenz-Schweißverfahren zum Verschweißen der Seitennaht von Laminattuben mit Aluminium- oder Kunststoff-Barriere-Folienlaminaten (PBL-Folien) bekannt. Das bekannte Verfahren arbeitet mit zwei unterschiedlichen Hochfrequenzfeldern, die für eine Aufschmelzung der sich überlappenden Fügepartner in der Schweißzone sorgen. Die Fügepartner werden im Sandwich von zwei metallischen Schweißbändern geführt. Die Schweißbänder haben dabei zwei Funktionen: Einerseits sorgen sie aufgrund der HF-Felder für ein Aufschmelzen der Fügepartner und übernehmen andererseits die Transport- und Führungsfunktion der von der Laminatfolie gebildeten Fügepartner. Die Schweißbänder sind in stetigem Kontakt mit den Oberflächen der Fügepartner und sind repetitiv im Zyklus Heizen (Aufschmelzen) - Kühlen (Erzeugen der dauerhaften Verbindung in der Schweißnaht) - Heizen (Aufschmelzen) etc. Es entspricht dem heutigen Stand der Technik, die als Schweißbänder zum Einsatz kommenden Stahlbänder mit einer einmaligen, dauerhaften, festen Antihaftbeschichtung zu versehen, um zu verhindern, dass der aufgeschmolzene Kunststoff an den Schweißbändern haften bleibt und so Spuren auf den herzustellenden Schweißnähten hinterlässt. Die zum Einsatz kommende Antihaftbeschichtung muss temperaturbeständig sein und möglichst lange den niedrigen Einflüssen während des kontinuierlichen Schweißprozesses standhalten. Dabei ist ein natürlicher Verschleiß nicht zu vermeiden, so dass die Schweißbänder in regelmäßigen Abständen ausgetauscht werden müssen. Hiermit sind nicht unerhebliche Kosten verbunden.

Ausgehend von dem vorbekannten Stand der Technik liegt der Erfindung die Aufgabe zugrunde, ein verbessertes Schweißverfahren sowie eine verbesserte Schweißvorrichtung anzugeben, mit denen die Lebensdauer von Schweißbändern erhöht wird, um somit höhere Standzeiten von Schweißvorrichtungen oder mit diesen ausgestatteten Anlagen, insbesondere zur Verpackungstubenherstellung, zu erzielen.

Diese Aufgabe wird bei einem gattungsgemäßen Schweißverfahren dadurch gelöst, dass das erste Schweißband während des Umlaufens und/oder im Stillstand mit einem flüssigen Medium zum Verhindern eines Anhaftens des ersten Fügepartners an dem ersten Schweißband beaufschlagt wird. Bei einer gattungsgemäßen Schweißvorrichtung wird die Aufgabe dadurch gelöst, dass diese mindestens eine Beaufschlagungseinrichtung umfasst, die Mittel zum Beaufschlagen mindestens eines Schweißbandes mit einem flüssigen Medium, während des Umlaufens und/oder im Stillstand des Schweißbandes, umfasst, um ein Anhaften eines Fügepartners an dem Schweißband zu verhindern.

Die Erfindung führt auch auf eine Beaufschlagungseinrichtung zum Einsatz bei einem Schweißverfahren bzw. zum Einsatz in einer Schweißvorrichtung. Die Beaufschlagungseinrichtung dient zum Beaufschlagen einer oder zwei Seiten (Flachseiten) mindestens eines Schweißbandes mit einem Fluid zur Verbesserung der Antihafteigenschaft. Bevorzugt ist die Beaufschlagungseinrichtung nachrüstbar ausgebildet, um bestehende Schweißvorrichtungen zur Realisierung des erfindungsgemäßen Schweißverfahrens nachrüsten zu können.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, ein flüssiges Medium in einer Schweißvorrichtung auf das mindestens eine Schweißband auf einer oder beiden Seiten zu applizieren, um somit einen Antihafteffekt zu bewirken, um zu verhindern, dass aufgeschmolzenes Fügepartnermaterial an dem mindestens einen Schweißband anhaftet. Dabei kann das flüssige Medium derart gewählt sein, dass es im fluiden Zustand die Haftungsneigung reduziert, dass also zwischen dem Fügepartner und dem Schweißband ein Fluidfilm erzeugt wird. Zusätzlich oder alternativ kann ein flüssiges Medium eingesetzt werden, das zu einer festen Antihaftbeschichtung aushärtet. Der Kerngedanke der Erfindung besteht darin, dass die Antihafteigenschaft des Schweißbandes durch eine Fluidschicht und/oder eine aus dem fluiden Medium ausgebildete Beschichtung in der Schweißvorrichtung erneuert wird, ohne dass es notwendig wäre, das Schweißband auszutauschen. Insgesamt führt die Realisierung des erfindungsgemäßen Verfahrens dazu, dass das Schweißband bis zu seinem mechanischen Verschleiß benutzt werden kann, was die Standzeit der Schweißvorrichtung wesentlich erhöht. Im Gegensatz dazu muss bei bekannten Anlagen das Schweißband entsorgt werden, obwohl nur dessen Beschichtung abgenutzt ist. Grundsätzlich ist es möglich, dass das Schweißband kontinuierlich, d.h. während des gesamten Schweißprozesses mit dem flüssigen Medium beaufschlagt wird. Bevorzugt ist es jedoch, wenn die Beschichtung bzw. Beaufschlagung diskontinuierlich, vorzugsweise in regelmäßigen oder bedarfsabhängigen Intervallen, erfolgt. Ganz besonders bevorzugt ist es, wenn die Beschichtungsdauer und/oder Beschichtungsmenge und/oder der Beschichtungszeitraum bzw. die Beschichtungsintervalle vorgebbar und/oder bedarfsabhängig, vorzugsweise automatisch, bestimmt werden. Ganz besonders bevorzugt ist hierzu eine Steuereinrichtung vorgesehen, die noch weiter bevorzugt Bestandteil der Steuerung der Schweißvorrichtung ist. Alternativ ist die Steuerung Bestandteil einer Beaufschlagungseinrichtung, die Bestandteil der Schweißvorrichtung ist. Eine derartige Beaufschlagungseinrichtung ist entweder von Beginn an Bestandteil einer Schweißvorrichtung, d.h. gehört zur Basisausstattung oder kann bei bestehenden Schweißvorrichtungen nachgerüstet werden.

Grundsätzlich ist es möglich, das fluide Medium während des Umlaufens, d.h. auf das sich bewegende Schweißband aufzubringen. Zusätzlich oder alternativ kann das flüssige Medium in Stillstandszeiten des Schweißbandes, beispielsweise durch Besprühen, Begießen oder Eintauchen des Schweißbandes aufgebracht werden.

Zusammenfassend ist festzustellen, dass das erfindungsgemäße Verfahren und eine zur Ausführung des Verfahrens ausgebildete Schweißvorrichtung im Vergleich zu bekannten Verfahren bzw. bekannten Schweißvorrichtungen reduzierte Stillstandszeiten mit sich bringt, da das mindestens eine Schweißband sehr viel weniger oft gewechselt werden muss. Dies führt zu reduzierten Kosten aufgrund der erhöhten Laufzeit des Schweißbandes. Ein weiterer wesentlicher Vorteil ist, dass die Laufzeit des Schweißbandes voll ausgenutzt wird, was insgesamt zu weniger Abfall führt. Darüber hinaus kann erreicht werden, dass die Antihafteigenschaften, zumindest näherungsweise, über die Lebensdauer des Schweißbandes gleich bleiben ― eine ständige Verschlechterung der Antihafteigenschaften, wie dies bei bekannten Vorrichtungen der Fall ist, ist nicht gegeben, da die Beschichtung laufend erneuert wird. Ein weiterer wesentlicher Vorteil ist der aus der Anwendung des Verfahrens bzw. dem Einsatz der Schweißvorrichtung resultierende geringere Energiebedarf, da die Schweißbänder aufgrund der vergleichsweise geringen Schichtdicke, insbesondere im Mikrometerbereich, wesentlich kleinere Wärmeisolationswerte aufweisen.

Bei Bedarf kann in die Schweißvorrichtung ein bereits vorbeschichtetes Schweißband eingesetzt werden oder im einfachsten Fall ein unbeschichtetes Band, beispielsweise ein Stahlband. Für den Fall des Einsatzes eines vorbeschichteten Schweißbandes ist es bevorzugt, wenn dieses mittels des gleichen Mediums vorbeschichtet wurde, das auch in der Schweißvorrichtung zum Einsatz kommt.

In Weiterbildung der Erfindung ist mit Vorteil vorgesehen, dass zusätzlich zu dem ersten, endlosen, umlaufend angetriebenen Schweißband ein zweites, endloses, umlaufendes Schweißband vorgesehen ist, welches bevorzugt abschnittsweise parallel zu dem ersten Schweißband verläuft. Bevorzugt ist das zweite Schweißband relativ zu dem ersten Schweißband derart angeordnet, dass der erste und der zweite Fügepartner, die beide von einem gemeinsamen Teil, insbesondere einer gemeinsamen, vorzugsweise einer Barriereschicht aufweisenden Verbundfolie gebildet werden können, sandwichartig zwischen den Schweißbändern aufgenommen werden, vorzugsweise, derart, dass die Fügepartner mittels der Schweißbänder transportiert werden. Hierzu bewegen sich die Schweißbänder beispielsweise mit der gleichen Geschwindigkeit. Besonders vorteilhaft ist es, wenn die Schweißbänder mit einer geringfügig unterschiedlichen Geschwindigkeit betrieben werden. In Weiterbildung der Erfindung beträgt der Geschwindigkeitsunterschied zwischen etwa 1% und etwa 10%, bevorzugt beträgt der Geschwindigkeitsunterschied etwa 5%. Besonders zweckmäßig ist es, wenn nicht nur das erste, sondern zusätzlich auch das zweite Schweißband während des Umlaufens des Schweißbandes und/oder im Stillstand des Schweißbandes mit einem die Antihafteigenschaften verbessernden flüssigen Medium beaufschlagt wird, um zu verhindern, dass der zweite, aufgeschmolzene Fügepartner an dem zweiten Schweißband anhaftet. Wie bei dem ersten Schweißband kann das flüssige Medium durch die Ausbildung eines Flüssigkeitsfilms die Antihafteigenschaften verbessern und/oder dadurch, dass das flüssige Medium eine feste Antihaftbeschichtung auf dem Schweißband ausbildet.

Wie eingangs bereits angedeutet, ist es besonders bevorzugt, wenn die beiden Fügepartner unterschiedliche Abschnitte, insbesondere stumpf aneinander gefügte oder sich überlappende Randabschnitte ein und desselben Teils, insbesondere einer Folie, sind, ganz besonders bevorzugt einer sogenannten PBL-Folie (P für Plastik, B für Barriere, L für Laminat) oder einer ABL-Folie (A für Aluminium, B für Barriere, L für Laminat) oder einer CBL-Folie (C für Keramik-SiOx-, B für Barriere, L für Laminat). Die Barriereschicht der Folie kann beispielsweise von einer Metallschicht, insbesondere einer Aluminiumschicht, gebildet werden. Alternativ können mit dem erfindungsgemäßen Verfahren Vollkunststoff-Laminate verschweißt werden, bei denen eine Kunststoff-Barriere, beispielsweise eine Folie aus PET (Polyethylenterephthalat), eine SiOx-Schicht, eine Aluminium-Schicht oder eine EVOH-Schicht vorgesehen ist.

Ganz besonders bevorzugt ist es, mit dem erfindungsgemäßen Schweißverfahren und/oder mit der erfindungsgemäßen Schweißvorrichtung einen, vorzugsweise zylindrischen, Rohrkörper, insbesondere aus einer wie zuvor erläutert ausgebildeten PBL-Folie auszubilden, wobei der Rohrkörper in weiteren Verfahrensschritten bevorzugt Teil einer Verpackungstube wird, beispielsweise einer Zahnpastatube. Mittels des Schweißverfahrens werden zwei Folienränder derart verschweißt, dass aus der Folie der vorerwähnte Rohrkörper gebildet wird.

Ganz besonders bevorzugt umfasst das die Antihafteigenschaften verbessernde Medium eine Polymerverbindung und/oder ein Öl und/oder Polytetrafluorethylen und/oder alternative Verbindungen.

Bevorzugt handelt es sich bei dem flüssigen Medium um eine Lösung, oder um eine Mischung. Diese kann eines oder mehrere Lösungsmittel aus folgender Substanzengruppe beinhalten: Alkane, Alkohole, Ammoniakverbindungen, Benzole, Chlorwasserstoffe, Ester, Ether, Ketone, Nitroverbindungen, Säuren, Wasser. Mit Vorteil umfasst die Lösung bzw. Mischung mindestens eine Substanz (Aditiv) aus der folgenden Substanzengruppe: Fluorpolymere, keramische Stoffe wie Keramik-Oxide, Kohlenstoff-Nanoröhren (KNR), Metalloxid-Nanopartikel, Silizium und Siliziumverbindungen wie beispielsweise Silizium basierte Polymere, Siliziumkarbide, Siliziumwasserstoffe (Silane), Solpartikel oder Solgele. Im Falle von Festpartikeln handelt es sich bevorzugt um feinst dispergierte Substanzen.

Im Hinblick auf das Aufbringen des flüssigen Mediums gibt es unterschiedliche Möglichkeiten. So kann das mindestens eine Schweißband beispielsweise durch Besprühen und/oder durch Begießen, insbesondere mittels eines Mediumvorhangs, beaufschlagt werden. Zusätzlich oder alternativ kann das Schweißband in das flüssige Medium getaucht bzw. durch dieses hindurchgefördert werden.

Wie eingangs erwähnt, kann das flüssige Medium die Antihafteigenschaft auf zwei unterschiedliche, kumulativ oder alternativ realisierbare Weisen verbessern. Zum einen kann sich ein flüssiger Mediumfilm zwischen einem Fügepartner und dem zugehörigen Schweißband ausbilden, der ein Anhaften verhindert. Auch ist es möglich, dass sich das flüssige Medium in eine feste Antihaftbeschichtung umwandelt, beispielsweise indem ein Lösungsmittel ausdampft und/oder eine Vernetzung stattfindet, die gegebenenfalls thermisch und/oder durch Bestrahlung initiiert werden kann. Im letztgenannten Fall ist/sind bevorzugt eine entsprechende Heizeinrichtung und/oder eine Strahlenquelle für energiereiche Strahlung vorgesehen.

Die Erfindung führt auch auf eine Beaufschlagungseinrichtung (Appliziergerät, Dispenser, Dosiereinheit) zum Einsatz bei einem, vorzugsweise wie zuvor beschrieben ausgebildeten, Schweißverfahren bzw. zum Einbau bzw. Einsatz in einer Schweißvorrichtung. Die Beaufschlagungseinrichtung zeichnet sich mit Mitteln zum Beaufschlagen mindestens eines Schweißbandes mit einem flüssigen Medium während des Umlaufens und/oder im Stillstand des Schweißbandes aus, mit dem Ziel, ein Anhaften des Fügepartners an dem Schweißband zu verhindern. Die Beaufschlagungseinrichtung kann Bestandteil einer Schweißvorrichtung sein oder zum Nachrüsten in eine solche ausgebildet und bestimmt sein.

Ganz besonders bevorzugt ist die Beaufschlagungseinrichtung derart ausgebildet, dass das flüssige Medium in einem, vorzugsweise auswechselbaren, Behälter (Kartusche) bereitgestellt werden kann.

Die Erfindung führt auch auf eine Schweißvorrichtung, die bevorzugt zur Durchführung des erfindungsgemäßen Verfahrens ausgebildet ist. Die-Schweißvorrichtung zeichnet sich durch mindestens eine Energiequelle, beispielsweise einen Hochfrequenzgenerator, einen Ultraschallgenerator oder einen bestrombaren elektrischen Widerstand zum Zusammenwirken mit einem endlosen, umlaufend antreibbaren ersten Schweißband aus, wobei das Schweißband bevorzugt relativ zu der Energiequelle bewegbar angeordnet ist. Die Energiequelle dient zum Bereitstellen der für den Schweißprozess benötigten Energie. Erfindungsgemäß ist die Schweißvorrichtung mit einer wie zuvor beschrieben ausgebildeten Beaufschlageinrichtung ausgestattet, wodurch es möglich wird, das mindestens eine Schweißband innerhalb der Schweißvorrichtung mit einem flüssigen Medium zur Verbesserung der Antihafteigenschaften zu beaufschlagen.

In Weiterbildung der Erfindung ist mit Vorteil vorgesehen, dass zusätzlich zu dem ersten Schweißband ein zweites Schweißband vorgesehen ist, welches bevorzugt ebenfalls endlos und umlaufend antreibbar ist, um zwischen den beiden Schweißbändern die beiden Fügepartner aufnehmen und mittels der Schweißbänder transportieren zu können. Bei Bedarf kann dem zweiten Schweißband eine eigene (zweite) Energiequelle, insbesondere ein zweiter Hochfrequenzgenerator, zugeordnet werden, um auch über das zweite Schweißband Wärme in die Schweißzone einzutragen.

Besonders bevorzugt sind die Mittel zum Beaufschlagen des mindestens einen Schweißbandes mit flüssigem Medium derart positioniert, dass das Schweißband nicht mit Schweißtemperatur beschichtet werden kann. Bevorzugt liegt die Temperatur des Schweißbandes beim Erreichen der Mittel deutlich unterhalb der Schweißtemperatur, vorzugsweise mindestens 30%, besonders bevorzugt mindestens 50% unter dieser Schweißtemperatur.

In Weiterbildung der Erfindung ist mit Vorteil vorgesehen, dass die Mittel zum Besprühen, Begießen und/oder Tauchen ausgebildet sind.

Die Erfindung führt auch auf die Verwendung einer wie zuvor beschrieben ausgebildeten Schweißvorrichtung zur Herstellung von Rohrkörpern für Verpackungstuben.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematisierte Darstellung einer als Hochfrequenzschweißvor- richtung ausgebildeten Schweißvorrichtung zur Herstellung von Rohrkörpern für Verpackungstuben aus PBL-Folien,
- Fig. 2:: eine Schnittansicht einer als Hochfrequenz-Schweißvorrichtung ausgebildeten Schweißvorrichtung im Schweißbereich, und
- Fig. 3:: eine Schweißvorrichtung mit auf Stoß angeordneten Fügepartnern.

In den Figuren sind gleiche Elemente und Elemente mit der gleichen Funktion mit den gleichen Bezugszeichen gekennzeichnet.

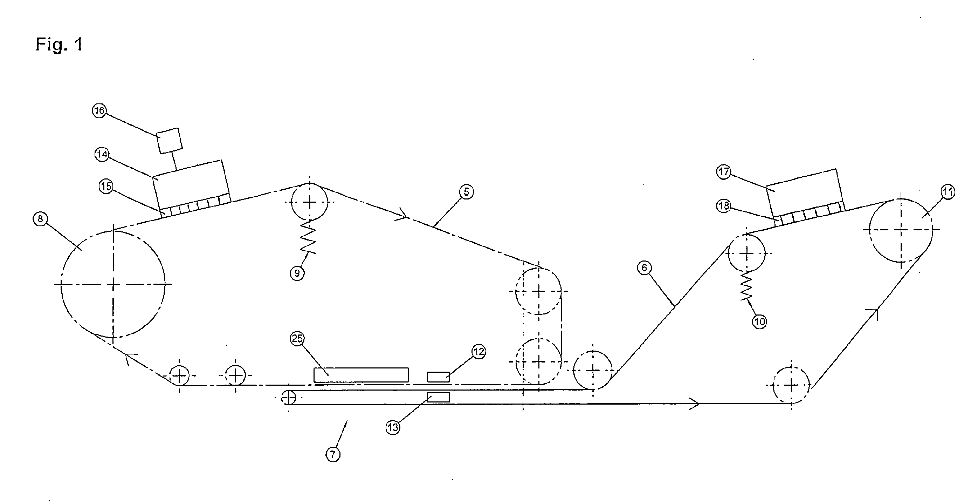

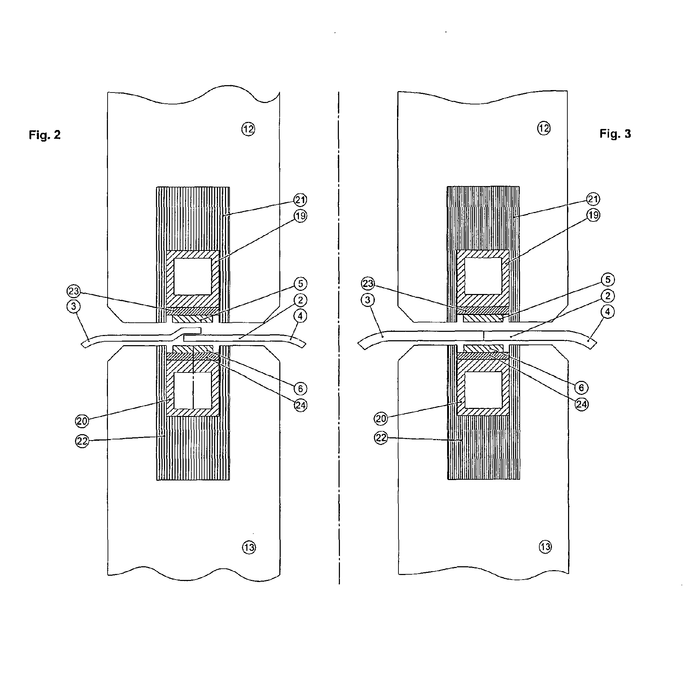

Fig. 1 zeigt wichtige Bauteile einer Schweißvorrichtung 1 zum Verschweißen zweier in Fig. 2 dargestellter Fügepartner 2, 3 (erste Fügepartner 2, zweiter Fügepartner 3). Die beiden Fügepartner 2, 3 werden von je einem Längsrandabschnitt einer als PBL-Folie ausgebildeten Folie 4 gebildet. Die Längsränder, d.h. die Fügepartner 2, 3 werden miteinander verschweißt, um so einen Rohrkörper für eine Verpackungstube zu bilden.

Die als Hochfrequenzschweißvorrichtung ausgebildete Schweißvorrichtung 1 umfasst ein erstes endloses, umlaufend angetriebenes Schweißband 5 sowie ein abschnittsweise parallel dazu verlaufendes endloses, umlaufend angetriebenes zweites Schweißband 6. Das zweite, hier untere, Schweißband 6 bildet ein so genanntes inneres Schweißband, das mit seinem in der Zeichnungsebene rechten Abschnitt 7 in den nicht dargestellten, herzustellenden Rohrkörper hineinragt, wohingegen das erste Schweißband 5 entlang der äußeren Mantelfläche verläuft. Das erste Schweißband 5 ist über eine Anzahl von Rollen geführt und es ist ein erster elektromotorischer Antrieb zum Antreiben des ersten Schweißbandes 5 in Umfangsrichtung vorgesehen. Ferner ist dem ersten Schweißband eine erste Spanneinrichtung 9 zum definierten Spannen des ersten Schweißbandes 5 zugeordnet. Dem zweiten Schweißband 6 ist eine zweite, analog aufgebaute zweite Spanneinrichtung 10 zugeordnet. Weiterhin ist ein zweiter elektromotorischer Antrieb 11 vorgesehen.

Insgesamt umfasst die Vorrichtung 1 jeweils als Hochfrequenzgenerator ausgebildete Energiequellen 12, 13 (erste Energiequelle 12, zweite Energiequelle 13), die in an sich bekannter Weise ausgebildet sind und mit dem jeweiligen Schweißband 5, 6 zusammenwirken können. In einem Bereich zwischen den gegenüberliegenden Energiequellen 12, 13 werden die nicht dargestellten Fügepartner zur Ausbildung einer Längsschweißnaht ineinander verschweißt. Den Energiequellen 12, 13 nachgeordnet ist eine von Kühlbalken gebildete Kühlzone 25 zum schnellen Abkühlen der gefügten Fügepartner 2, 3.

Dem ersten Schweißband 5 ist eine erste Beaufschlagungseinrichtung 14 zugeordnet, die erste Mittel 15, beispielsweise ein Tauchbad und/oder Sprühdüsen aufweist, um das erste Schweißband 5 mit einem flüssigen Medium beschichten zu können, wobei das flüssige Medium bevorzugt aushärtet und eine dünne, im Mikrometerbereich (vorzugsweise 1 - 20pm) liegende Antihaftbeschichtung auf dem aus Stahl ausgebildeten ersten Schweißband 5 ausbildet. Der ersten Beaufschlagungseinrichtung 14, die Bestandteil der Schweißvorrichtung 1 ist, ist eine Steuerung 16 zugeordnet, die Bestandteil der Gesamtsteuerung der Schweißvorrichtung 1 sein kann. Die Steuerung 16 kontrolliert bzw. steuert und/oder regelt das Beaufschlagungsintervall, die Beaufschlagungsdauer und die Beaufschlagungsmenge.

Zu erkennen ist, dass das Schweißband 5 an der nach außen gerichteten Flachseite beschichtet wird, die während des Schweißprozesses mit dem ersten Fügepartner in Kontakt kommt.

Analog ist dem zweiten Schweißband 6 eine zweite Beschichtungseinrichtung 17 zugeordnet, die zweite Mittel 18 zum Beaufschlagen des zweiten Schweißbandes 6 mit einem flüssigen Medium zur Verbesserung der Antihafteigenschaften aufweist. Bei einer alternativen Ausführungsvariante einer Schweißvorrichtung kann den beiden Schweißbändern 5, 6 auch eine einzige, gemeinsame Beaufschlagungseinrichtung zugeordnet werden.

Fig. 2 dient lediglich zur Verdeutlichung der Funktionsweise der Schweißvorrichtung 1. Die Beaufschlagungseinrichtungen sind aus Fig. 2 nicht zu erkennen. Fig. 2 zeigt eine schematische Schnittansicht durch die Schweißzone gemäß Fig. 1.

Wie aus Fig. 2 ersichtlich ist, umfasst jede Energiequelle 12, 13 eine Spule 19, 20 und einen Ferritkern 21, 22, wobei zwischen jeder Spule 19, 20 und dem zugehörigen Schweißband 5, 6 eine Isolationsschicht 23, 24 angeordnet ist.

Fig. 3 zeigt eine Schweißvorrichtung 1, bei der zwei auf Stoß angeordnete Fügepartner 2, 3, die von zwei Schweißbändern 5, 6, welche mit geringfügig unterschiedlicher Geschwindigkeit umlaufen, sandwichartig geklemmt sind. Ansonsten entspricht die Schweißvorrichtung 1 gemäß Fig. 3 der in Fig. 2 gezeigten Schweißvorrichtung 1.

## Patentansprüche

1. Schweißverfahren zum Fügen eines ersten Fügepartners (2) mit mindestens einem zweiten Fügepartner (3), insbesondere zum Herstellen eines Rohrkörpers für eine Verpackungstube, wobei der erste Fügepartner (2) mittels eines endlosen, umlaufenden, ersten Schweißbandes (5) aufgeschmolzen wird,
**dadurch gekennzeichnet,**
**dass** das erste Schweißband (5), während des Umlaufens und/oder im Stillstand, mit einem flüssigen Medium zum Verhindern eines Anhaftens des ersten Fügepartners (2) an dem ersten Schweißband (5) beaufschlagt wird.

2. Verfahren nach Anspruch 1,
**dadurch gekennzeichnet,**
**dass** der zweite Fügepartner (3), insbesondere auf einer von dem ersten Schweißband (5) abgewandten Seite mittels eines endlosen, umlaufenden, zweiten Schweißbandes (6) aufgeschmolzen wird, und dass das zweite Schweißband (6) während des Umlaufens und/oder im Stillstand mit einem flüssigen Medium zum Verhindern eines Anhaftens des zweiten Fügepartners (3) an dem zweiten Schweißband (6) beaufschlagt wird.

3. Verfahren nach Anspruch 2,
**dadurch gekennzeichnet,**
**dass** der erste und der zweite Fügepartner (2, 3) sandwichartig zwischen das erste und das zweite Schweißband (5, 6) geklemmt und von den Schweißbändern (5, 6) transportiert werden.

4. Verfahren nach einem der vorhergehenden Ansprüche,
**dadurch gekennzeichnet,**
**dass** die Fügepartner (2, 3) unterschiedliche, vorzugsweise randseitige Abschnitte, desselben Teils, vorzugsweise einer, zumindest eine Kunststoffschicht umfassenden oder von einer Kunststoffschicht gebildeten Folie (4) sind.

5. Verfahren nach einem der vorhergehenden Ansprüche,
**dadurch gekennzeichnet,**
**dass** mittels des Schweißverfahrens ein Rohrkörper, insbesondere für eine Verpackungstube, durch Verschweißen eines den ersten Fügepartners (2) bildenden ersten Folienrand mit einem den zweiten Fügepartner (3) bildenden zweiten Folienrand hergestellt wird.

6. Verfahren nach einem der vorhergehenden Ansprüche,
**dadurch gekennzeichnet,**
**dass** die Beaufschlagungsmenge an flüssigem Medium und/oder ein Beaufschlagungsintervall und/oder eine Beaufschlagungszeit einstellbar, vorzugsweise regelbar, ist.

7. Verfahren nach einem der vorhergehenden Ansprüche,
**dadurch gekennzeichnet,**
**dass** das flüssige Medium durch Besprühen, Begießen und/oder Tauchen aufgebracht wird.

8. Verfahren nach einem der vorhergehenden Ansprüche,
**dadurch gekennzeichnet,**
**dass** als erstes und/oder zweites Schweißband (5, 6) ein Metallband, insbesondere Stahlband, eingesetzt wird/werden.

9. Verfahren nach einem der vorhergehenden Ansprüche,
**dadurch gekennzeichnet,**
**dass** beim Verschweißen ein flüssiger Mediumfilm zwischen dem ersten Fügepartner (2) und dem ersten Schweißband (5) und/oder dem zweiten Fügepartner (3) und dem zweiten Schweißband (6) zur Verbesserung der Antihafteigenschaft ausgebildet wird und/oder dass das Medium eine feste Antihaftbeschichtung ausbildend ausgebildet ist.

10. Beaufschlagungseinrichtung (14, 17) zum Einsatz bei einem Schweißverfahren, insbesondere nach einem der vorhergehenden Ansprüche, bzw. zum Einsatz in einer Schweißvorrichtung (1), vorzugsweise nach einem der Ansprüche 13 bis 17, mit Mitteln (15, 18) zum Beaufschlagen mindestens eines Schweißbandes (5, 6) mit einem flüssigen Medium während des Umlaufens und/oder im Stillstand des Schweißbandes (5, 6) zum Verhindern eines Anhaftens des Fügepartners (2, 3) an dem Schweißband (5, 6).

11. Beaufschlagungseinrichtung nach Anspruch 10,
**dadurch gekennzeichnet,**
**dass** die Beaufschlagungseinrichtung (14, 17) zur Entnahme von flüssigem Medium aus von das flüssige Medium beinhaltenden, austauschbaren Kartuschen ausgebildet ist.

12. Schweißvorrichtung (1), insbesondere zur Durchführung des Verfahrens nach einem der Ansprüche 1 bis 9, mit einer ersten Energiequelle (12) zum Zusammenwirken mit einem endlosen, umlaufend antreibbaren ersten Schweißband (5),
**gekennzeichnet durch** mindestens eine Beaufschlagungseinrichtung (14, 17) gemäß einem der Ansprüche 11 oder 12.

13. Vorrichtung nach Anspruch 12,
**dadurch gekennzeichnet,**
**dass** ein endloses, umlaufend antreibbares zweites Schweißband (6) zum Erhitzen eines zweiten Fügepartners (3) vorgesehen ist, dem ggf. eine zweite Energiequelle (13) zugeordnet ist.

14. Vorrichtung nach Anspruch 13,
**dadurch gekennzeichnet,**
**dass** die Schweißbänder (5, 6) derart angeordnet sind, dass die Fügepartner (2, 3) zwischen dieses aufnehmbar und mit den Schweißbändern (5, 6) mit transportierbar sind.

15. Verwendung einer Schweißvorrichtung (1) nach einem der Ansprüche 13 bis 17 zur Herstellung von Rohrkörpern, insbesondere aus einer PBL-Folie, einer ABL-Folie oder einer CBL-Folie, für Verpackungstuben.
